# EUROPÄISCHE PATENTANMELDUNG

(11) **EP 2 492 864 A1**
(43) Veröffentlichungstag der Anmeldung: **29.08.2012**
(21) Anmeldenummer: 12001079.8
(22) Anmeldetag: 18.02.2012
(51) Int. Cl.: G06Q 30/02

(54) **Verfahren zur automatisierten Einstellung von Umgebungsparametern an Präsentationsflächen sowie Vorrichtung hierzu**

(30) Priorität: 24.02.2011 DE 102011012336
(71) Anmelder: Dula-Werke Dustmann & Co. GmbH, 44225 Dortmund (DE)
(72) Erfinder: Dustmann, Heinz-Herbert, 44227 Dortmund (DE)
(74) Vertreter: Patentanwälte Buse, Mentzel, Ludewig

(57) **Zusammenfassung**

Die Erfindung betrifft ein Verfahren zur automatisierten Einstellung von Umgebungsparametern an Präsentationsflächen. Hierzu ist ein Warenträger vorgesehen, mittels welchem Waren präsentiert werden können und der beispielsweise als Regal oder sonstiges Möbelstück oder auch als Schaufensterpuppe oder Ähnliches ausgebildet ist. Weiterhin ist ein Datenspeicher in Form eines Transponders, wie einem RFID-Tag vorgesehen, der an dem Warenträger anbringbar ist. Weiterhin existieren ein oder mehrere Parametereinrichtungen, die Umgebungsparameter, wie Licht, Temperatur, Geräusche, Musik, Videos usw. ändern bzw. einstellen können. Weiterhin ist noch eine Ausleseeinheit vorgesehen, die an oder in der Nähe der Präsentationsfläche anbringbar ist und die die auf dem Transponder gespeicherten Daten ausliest und einer Steuerung zuführt. Mittels dieser Steuerung werden dann die Parametereinrichtungen gesteuert und somit die Umgebungsparameter eingestellt. Das Auslesen der Daten mittels der Ausleseeinheit erfolgt dabei vorzugsweise automatisiert.

## Beschreibung

Die Erfindung betrifft ein Verfahren zur automatisierten Einstellung von Umgebungsparametern an Präsentationsflächen. Weiterhin betrifft die Erfindung eine Vorrichtung zur Durchführung dieses Verfahrens.

Bei Präsentationsflächen, insbesondere in Ladengeschäften oder Schaufenstern, kommt es darauf an, die dort präsentierten Waren möglichst ansprechend für den Kunden zu präsentieren. Hierzu gehören insbesondere Einstellungen der Umgebungsparameter, wie Beleuchtung, Filme, Musik, Geräusche oder Ähnliches. Gerade in Ladengeschäften werden jedoch solche Präsentationsflächen häufig umgestaltet, um immer wieder neue bzw. andere Waren entsprechend zu platzieren bzw. präsentieren. Nun müssen jedoch die Umgebungsparameter für die verschiedenen Waren immer wieder neu angepasst werden, um optimale Präsentationsvoraussetzungen zu schaffen. Man kann sich beispielsweise vorstellen, dass in einem Bekleidungsgeschäft Wintermäntel und Bademoden nicht mit den gleichen Umgebungsparametern präsentiert werden. Die verschiedenen Parametereinrichtungen immer wieder zu ändern und umzustellen, ist jedoch sehr zeitaufwendig. Darüber hinaus besteht die Gefahr, dass eine mit dem Umbau beauftragte Person es vergisst einen oder mehrere Parameter umzustellen bzw. versehentlich falsche Einstellungen vornimmt.

Der Erfindung liegt daher die Aufgabe zugrunde, für auf einer Präsentationsfläche ausgestellte Waren, die dazugehörigen Umgebungsparameter möglichst schnell und fehlerfrei einstellen zu können. Weiterhin ist es Aufgabe der Erfindung, eine Vorrichtung zu schaffen, mit welcher das entsprechende Verfahren durchgeführt werden kann. Der erste Teil der Aufgabe wird durch die Merkmale von Anspruch 1 gelöst, während der zweite Teil der Aufgabe durch die Merkmale von Anspruch 9 gelöst wird, wobei diesen Merkmalen folgende besondere Bedeutung zukommt.

Die Waren werden auf einem Warenträger platziert, bei welchem es sich um ein Möbelstück, wie ein Regal, eine Vitrine, einen Tisch oder auch um eine Schaufensterpuppe oder ein ähnliches Präsentationsstück handeln kann. Weiterhin ist ein Datenspeicher vorgesehen, der die Form eines Transponders hat, beispielsweise eines RFID-Tags, der an dem Warenträger anbringbar ist, insbesondere auch in einer Ausnehmung. Die Präsentationsfläche verfügt über eine Ausleseeinheit, die entweder direkt in ihr, unter ihr oder in der Nähe der Präsentationsfläche anbringbar ist. Diese Ausleseeinheit liest die auf dem Transponder gespeicherten Daten aus und führt sie einer Steuerung zu. Die Steuerung wiederum steuert die Parametereinrichtungen, wodurch die Umgebungsparameter wie gewünscht eingestellt werden. Das Auslesen der Daten mittels der Ausleseeinheit erfolgt dabei vorzugsweise automatisiert. So ist es möglich, für eine mit einem Aufbau oder Umbau der auf der Präsentationsfläche ausgestellten Warenträger beauftragte Person, den Warenträger mitsamt der Waren auf der Präsentationsfläche zu positionieren, woraufhin sich die verschiedenen Parametereinrichtungen automatisch einstellen, da der Transponder ausgelesen wird und die Daten zur Steuerung der Parametereinrichtungen verwendet werden. Wenn das Auslesen der Daten automatisiert erfolgt, geht die Parametereinstellung noch schneller und einfacher für die Bedienperson. So ist es insgesamt möglich, schnell und einfach die entsprechenden Waren auf der Präsentationsfläche auszustellen und dabei die gewünschten Umgebungsparameter automatisiert zu steuern.

In einem besonders bevorzugten Ausführungsbeispiel ist der an dem Warenträger angeordnete Transponder austauschbar und/oder die auf dem Transponder gespeicherten Daten. Im ersteren Falle können für die verschiedenen Arten von Waren direkt verschiedene Transponder vorgesehen sein, auf denen dann beispielsweise die entsprechenden Parametereinstellungen für die Umgebungsparameter direkt gespeichert sind. Diese Transponder können dann verwahrt werden, um zu einem späteren Zeitpunkt ähnliche Waren wieder genauso gut zu präsentieren. Alternativ können jedoch die auf dem Transponder gespeicherten Daten austauschbar sein. So kann einfach ein neuer Datensatz auf den Transponder eingespielt werden, wenn die auf dem Warenträger vorgesehenen Waren sich ändern. Welche der Möglichkeiten man wählt, hängt vom jeweiligen Anwendungsfall ab.

In einem Ausführungsbeispiel ist es vorgesehen, dass die Einstellungen der Parametereinrichtungen direkt auf dem Transponder gespeichert sind, wobei die Steuerung vorzugsweise im Warenträger in bzw. an der Präsentationsfläche oder nahe der Ausleseeinheit vorgesehen ist. Die Steuerung steuert dann die Parametereinrichtungen direkt oder indirekt. In diesem Ausführungsbeispiel können die genauen Einstellungen für die Parametereinrichtung direkt auf dem Transponder gespeichert werden und somit auch durch einfaches Kopieren des Transponders in gleichartigen anderen Räumlichkeiten verwendet werden ohne dass weitere Vorrichtungen, wie andere Computer oder Ähnliches vorgesehen sind.

Alternativ kann jedoch in dem Transponder auch lediglich eine Kennung vorgesehen sein, die von der Ausleseeinheit an eine Datenbank gesendet wird. In der Datenbank sind dann die gewünschten Parametereinstellungen gespeichert und werden dann an eine Steuerung übermittelt, welche diese dann mittelbar oder unmittelbar an die Parametereinrichtungen übersendet. Hierdurch können die verschiedenen Daten zu den verschiedenen Parametereinstellungen zentral gespeichert und verwaltet werden. Der Vorteil hiervon ist, dass es einfacher ist, eine Übersicht über die verschiedenen Einstellungen der Parametereinrichtungen zu erhalten.

Besonders bevorzugt werden für bestimmte Anlässe Sets von Umgebungsparametereinstellungen vorgesehen, abhängig von verschiedenen äußeren Einflüssen, wie beispielsweise Tageszeit, Jahreszeit, Art der ausgestellten Waren oder Farbe der präsentierten Waren. Dies ist insbesondere im Bekleidungsbereich vorteilhaft. So könnte man beispielsweise ein Sommer-und ein Winterset zusammenstellen oder auch ein Set für Freizeitkleidung und eines für formelle Kleidung bzw. eines für Jacken und Mäntel und eines für Blusen und Hosen oder auch eines für eher in schwarz und anthrazitfarben gehaltene Kleidung und eines für in Blautönen gehaltene Kleidung. Ebenso ist es möglich, die verschiedenen Sets für verschiedene Tageszeiten vorzusehen und somit ein anderes Set von Parametereinstellungen am Morgen als am Abend vorzusehen. Dies macht es einer Bedienperson noch einfacher, die gewünschten Parametereinstellungen vorzunehmen. Gerade bei einem Wechsel von Sets von Umgebungsparametereinstellungen abhängig von der Tageszeit, ist es möglich, diese automatisch beim Wechsel der Tageszeit bzw. insbesondere bei Schaufenstern beim Wechsel von hell zu dunkel bzw. von dunkel zu hell zu steuern, so dass sich die Sets der Umgebungsparametereinstellungen automatisch umstellen.

Um auch rückwirkend noch nachvollziehen zu können, welche Waren wann mit welchen Umgebungsparametereinstellungen ausgestellt wurden, können die Daten über die Waren zusammen mit den Daten der Umgebungsparametereinstellungen auf dem Transponder und/oder in einer Datenbank gespeichert werden. So kann auch nach Jahren noch nachvollzogen werden, welche Waren mit welchen Umgebungsparametern ausgestellt wurden und beispielsweise über die Verkaufszahlen Rückschlüsse darauf gezogen werden, ob die Waren bei diesen Umgebungsparametereinstellungen gut präsentiert wurden. Besonders einfach gestaltet sich dies, wenn die auf dem Warenträger ausgestellten Waren ebenfalls mit Transpondern versehen werden, welche dann automatisch von der Ausleseeinheit ausgelesen und weitergeleitet werden können, um dann an der entsprechenden Stelle direkt gespeichert zu werden. Auch ist es möglich, hierdurch die Einstellung der Umgebungsparameter direkt zu steuern, da durch das Erkennen der auf dem Warenträger befindlichen Waren, direkt die passenden Umgebungsparameter berechnet bzw. aus einer Datenbank herausgesucht werden können.

Es bietet sich an, die Daten für die Datenaustausch zwischen Ausleseeinheit und Datenbank bzw. Steuerung und/oder zwischen Datenbank und Steuerung und/oder zwischen Steuerung und Parametereinrichtung drahtlos zu übermitteln, insbesondere über Funk, Infrarot, Bluetooth oder W-LAN. Dadurch wird es ermöglicht, die Präsentationsflächen innerhalb eines Raumes einfach an eine andere Stelle zu bringen ohne dass Kabel verlegt werden müssten und so den Innenraum umzugestalten. Eine Umdekorierung der Räumlichkeiten ist somit auf einfach Art und Weise möglich. Auch kann das System einfach und schnell bei einem Umzug in ein anderes Gebäude transportiert werden.

Des Weiteren umfasst die Erfindung auch eine Vorrichtung zur Durchführung eines der zuvor beschriebenen Verfahren. Die Vorrichtung ist als Präsentationsstation ausgebildet, auf welcher der Warenträger und/oder die Ware selber angeordnet werden kann und welche eine Ausleseeinheit umfasst, die die auf dem Transponder gespeicherten Daten ausliest und die so angeordnet ist, dass ein normaler Kunde bzw. Betrachter diese nicht direkt sieht und diese daher nicht die Dekoration des Raumes stört. Daher ist die Ausleseeinheit bei normalem Gebrauch versteckt angeordnet und kann nur für bestimmte Zwecke vorteilhafter Weise zugänglich gemacht werden. Als Präsentationsfläche kommen insbesondere auch Podest in Frage.

## Patentansprüche

1. Verfahren zur automatisierten Einstellung von Umgebungsparametern an Präsentationsflächen,
mit einem Warenträger, mittels welchem Waren präsentiert werden können, wie einem Regal oder sonstigem Möbelstück, einer Schaufensterpuppe, einem Podest oder ähnlichem,
mit einem Datenspeicher in Form eines Transponders, wie einem RFID-Tag, der an dem Warenträger anbringbar ist,
mit einer oder mehreren Parametereinrichtungen, die Umgebungsparameter wie Licht, Temperatur, Geräusche, Musik, Videos usw. ändern bzw. einstellen können,
und mit einer Ausleseeinheit, die an oder in der Nähe der Präsentationsfläche anbringbar ist und die die auf dem Transponder gespeicherten Daten ausliest und einer Steuerung zuführt,
wobei mittels der Steuerung die Parametereinrichtung bzw. Parametereinrichtungen gesteuert und somit die Umgebungsparameter eingestellt werden
und wobei das Auslesen der Daten mittels der Ausleseeinheit vorzugsweise automatisiert erfolgt.

2. Verfahren nach Anspruch 1, **dadurch gekennzeichnet, dass** der an dem Warenträger angeordnete Transponder austauschbar ist und/oder dass die auf dem Transponder gespeicherten Daten austauschbar sind.

3. Verfahren nach einem der Ansprüche 1 oder 2, **dadurch gekennzeichnet, dass** die Einstellungen der Parametereinrichtungen direkt auf dem Transponder gespeichert sind, wobei die Steuerung insbesondere direkt in dem Warenträger und/oder an bzw. unter der Präsentationsfläche und/oder an der Ausleseeinheit vorgesehen ist und die Steuerung die Parametereinstellungen mittelbar oder unmittelbar an die Parametereinrichtungen übermittelt.

4. Verfahren nach einem der Ansprüche 1 oder 2, **dadurch gekennzeichnet, dass** die Ausleseeinheit die ausgelesenen Daten an eine Datenbank sendet auf welcher dann die gewünschten Parametereinstellungen gespeichert sind und die Steuerung dann die Parametereinstellungen mittelbar oder unmittelbar an die Parametereinrichtungen übermittelt.

5. Verfahren nach einem der Ansprüche 1 bis 4, **dadurch gekennzeichnet, dass** für bestimmte Anlässe verschiedene Sets von Umgebungsparametereinstellungen vorgesehen sind, insbesondere abhängig von der Tageszeit, der Jahreszeit, der Art der ausgestellten Waren, der Farben der präsentierten Waren.

6. Verfahren nach einem der Ansprüche 1 bis 5, **dadurch gekennzeichnet, dass** auf dem Transponder und/oder in der Datenbank zusammen mit den Daten der Umgebungsparametereinstellungen die Daten der Waren gespeichert werden, die bei den entsprechenden Umgebungsparametern ausgestellt werden.

7. Verfahren nach Anspruch 6, **dadurch gekennzeichnet, dass** die auf dem Warenträger ausgestellten Waren ebenfalls mit Transpondern, auf welchen Daten über die Waren gespeichert sind, versehen sind, welche automatisch von der Ausleseeinheit ausgelesen und dann weiter geleitet, gespeichert oder direkt verwendet werden.

8. Verfahren nach einem der Ansprüche 1 bis 7, **dadurch gekennzeichnet, dass** die Daten, die von der Ausleseeinheit weitergeleitet werden und/oder die Befehle, die von der Steuerung ausgesendet werden, drahtlos an die Steuerung und/oder an die Parametereinrichtung bzw. Parametereinrichtungen übermittelt werden, insbesondere über Funk, Infrarot, Bluetooth oder W-LAN.

9. Vorrichtung zur Durchführung eines Verfahrens nach einem der Ansprüche 1 bis 8, **dadurch gekennzeichnet, dass** die Vorrichtung als Präsentationsstation ausgebildet ist, auf welche der Warenträger und/oder die Ware selbst anordnenbar ist und welche eine Ausleseeinheit umfasst, die bei normalem Gebrauch versteckt angeordnet ist.
